# EUROPÄISCHE PATENTANMELDUNG

(11) **EP 0 911 248 A2**
(43) Veröffentlichungstag der Anmeldung: **28.04.1999**
(21) Anmeldenummer: 98119857.5
(22) Anmeldetag: 20.10.1998
(51) Int. Cl.: B62H 1/12

(54) **Zweirad**

(30) Priorität: 21.10.1997 DE 29718700 U; 07.01.1998 DE 19800292
(71) Anmelder: Kleine Borgmann, Beatrix, 79106 Freiburg (DE)
(72) Erfinder: Pfunder, Thomas, 79194 Heuweiler (DE)
(74) Vertreter: Schmitt, Hans, Dipl.-Ing.

(57) **Zusammenfassung**

Die Erfindung betrifft ein Zweirad (101) mit einem auf zumindest einer Seite angebrachten, durch eine Stützradkonstruktion (32) gehaltenen Stützrad (12), welche Stützradkonstruktion (32) einen am Rahmen schwenkbar gelagerten Schwingenarm (1) aufweist, an dessen freiem, äußeren Ende das Stützrad (12) angebracht ist, wobei der Schwingenarm (1) durch eine insbesondere gefederte Stützstrebe (12) abgestützt ist. Für das erfindungsgemäße Zweirad ist kennzeichnend, daß ein oder mehrere Gelenkstellen der Stützradkonstruktion werkzeuglos lösbare und festlegbare Kupplungen aufweisen. Da an zumindest einer Gelenkstelle der Stützradkonstruktion eine werkzeuglos lösbare und festlegbare Kupplung vorgesehen ist, läßt sich das erfindungsgemäße Zweirad im Bereich seiner eventuell auch breiten Stützradkonstruktionen (32) schnell und bequem zusammenlegen oder auseinanderbauen, wenn das Zweirad platzsparend transportiert oder gelagert werden muß.

## Beschreibung

Die Erfindung betrifft ein Zweirad mit einem auf zumindest einer Seite angebrachten, durch eine Stützradkonstruktion gehaltenen Stützrad, welche Stützradkonstruktion einen am Rahmen schwenkbar gelagerten Schwingenarm aufweist, an dessen freiem, äußeren Ende das Stützrad angebracht ist, wobei der Schwingenarm durch eine insbesondere gefederte Stützstrebe abgestützt ist.

Zweiräder mit seitlichen Stützradkonstruktionen sind beispielsweise als Transport- oder Behindertenfahrzeuge in verschiedenen Ausführungen bereits bekannt. So kennt man u.a. auch ein Therapie- und Behindertenfahrrad, an dessen beiden Längsseiten jeweils eine Stützradkonstruktion vorgesehen ist, die einen am Rahmen in einer Vertikalebene schwenkbar gelagerten Schwingenarm aufweist (vgl. Katalog "Behindertenfahrzeuge 1996" der Fa. Haverich, D-33513 Bielefeld und DBGM 84 08 621.1). Diese seitlich vorstehenden Schwingenarme, die an ihrem freien Schwingenarm-Ende jeweils ein Stützrad tragen, sind jeweils durch eine Stützstrebe abgestützt, die im wesentlichen durch eine Teleskopfeder gebildet wird.

Da sich die Stützradkonstruktion bei den bekannten Zweirädern nur umständlich und nicht ohne Werkzeug lösen läßt, können insbesondere solche Zweiräder nicht ohne weiteres im Auto mitgeführt, durch ein enges Treppenhaus transportiert oder in einem Fahrradkeller verstaut werden. Dies schränkt die Handhabbarkeit und den Anwendungsbereich solcher Zweiräder insbesondere für ältere oder behinderte Menschen ein. Die Handhabbarkeit solcher Zweiräder wird darüber hinaus auch dadurch erschwert, daß diese häufig auch ein problematisches Fahrverhalten beim Kurvenfahren aufweisen.

Es besteht daher insbesondere die Aufgabe, ein Zweirad der eingangs erwähnten Art zu schaffen, daß sich durch einen großen Anwendungsbereich sowie durch eine bequeme Handhabbarkeit auszeichnet.

Die erfindungsgemäße Lösung dieser Aufgabe besteht bei dem Zweirad der eingangs erwähnten Art insbesondere darin, daß ein oder mehrere Gelenkstellen der Stützradkonstruktion werkzeuglos lösbare und festlegbare Kupplungen aufweisen.

Auch die am erfindungsgemäßen Zweirad verwendete Stützradkonstruktion weist einen am Rahmen schwenkbar gelagerten Schwingenarm auf, der durch eine Stützstrebe abgestützt ist. Da an zumindest einer Gelenkstelle dieser Stützradkonstruktion eine werkzeuglos lösbare und festlegbare Kupplung vorgesehen ist, läßt sich das erfindungsgemäße Zweirad im Bereich seiner eventuell auch breiten Stützradkonstruktion schnell und bequem zusammenlegen oder auseinanderbauen, wenn das Zweirad platzsparend transportiert oder gelagert werden muß. Die leichte Montage und Demontage der Stützradkonstruktion erleichtert die Handhabbarkeit des erfindungsgemäßen Zweirades beispielsweise beim Tragen durch ein enges Treppenhaus oder auch beim Verstauen in einem Fahrradkeller. Da das erfindungsgemäße Zweirad trotz seiner Stützradkonstruktion auch in einem Auto platzsparend mitgeführt werden kann, wird der Anwendungsbereich eines solchen Zweirades wesentlich vergrößert.

Um beispielsweise das Zweirad platzsparend verstauen und um dazu die Stützstrebe lösen sowie den Schwingenarm an das Zweirad heranklappen zu können, ist es vorteilhaft, wenn die Gelenkstelle(n) zwischen der Stützstrebe und dem Schwingenarm und/oder zwischen dem Rahmen und der Stützstrebe und/oder zwischen dem Schwingenarm und dem Rahmen werkzeuglos lösbar und festlegbar ist (sind).

Damit das am freien äußeren Schwingenarm drehbar gehaltene Stützrad auch bei an den Rahmen herangeführter Stützradkonstruktion nicht sperrig im Wege steht, ist es zweckmäßig, wenn das oder die Stützräder mittels Steckachsen mit dem jeweiligen Schwingenarm verbunden sowie werkzeuglos lösbar und festlegbar sind. Möglich ist aber auch, daß der das Stützrad tragende Teilbereich der Stützradkonstruktion am Schwingenarm schwenkbar und in einer Fahrtstellung festlegbar gehalten ist, so daß nicht nur der Schwingenarm, sondern auch das daran befindliche Stützrad zum Rahmen hin platzsparend eingeschwenkt werden kann.

Eine bevorzugte Ausführungsform gemäß der Erfindung sieht vor, daß die werkzeuglos lösbaren und festlegbaren Kupplungen durch Schnellspanner oder verschließbare Schnelltrennkupplungen gebildet sind. Insbesondere als Schnellspanner ausgebildete Kupplungen sind leicht zu handhaben und begünstigen den geringen Herstellungsaufwand des erfindungsgemäßen Zweirades. Verschließbare Schnelltrennkupplungen sichern das Zweirad gegen unberechtigte Manipulationen im Bereich dieser Gelenkstellen.

Um das Zweirad an die Geländesituation oder an das Können des Fahrers anpassen zu können und um die Stützradkonstruktion bedarfweise in Richtung zum Rad einschwenken zu können, ist es vorteilhaft, wenn die Stützstrebe und/oder der Schwingenarm teleskopartig längenveränderbar und in der jeweiligen Länge festlegbar sind.

Der Auf- und Abbau der Stützradkonstruktion wird wesentlich vereinfacht und ist mit geringem Zeitaufwand möglich, wenn der Schwingenarm und die Stützstrebe nach dem Lösen der Schnellspannkupplungen zum Zweirad hin faltbar sind. Dabei sieht eine bevorzugte und besonders platzsparend zu verstauende Ausführungsform gemäß der Erfindung vor, daß ein Schnellspannlöseelement zwischen Stützstrebe und Schwingenarm angebracht ist und zum Lösen dieses Schnellspannlöseelementes zuerst die Stützstrebe nach unten an das Zweirad und dann der Schwingenarm nach oben an das Zweirad faltbar sind.

Das erfindungsgemäße Zweirad kann die Stützradkonstruktion an einer Längsseite oder beidseits beziehungsweise an der Vorderradgabel und/oder am Hinterbau aufweisen. Bevorzugt wird jedoch eine Ausführungsform, bei welcher solche Stützradkonstruktionen beidseits am Hinterbau vorgesehen sind.

Das erfindungsgemäße Zweirad läßt sich zum Transport bedarfsweise rasch zusammenlegen, wenn ein mit der Stützstrebe verbundenes Schnellspannlöseelement etwa vertikal verschiebbar an einer Hinterbaustrebe angebracht ist und durch Verschieben der Stützstrebe und des Schwingenarms nach oben das Stützrad an das Zweirad faltbar ist. Eine andere Ausführungsform gemäß der Erfindung sieht dazu vor, daß ein Schnellspannlöseelement an einem Anbringungspunkt zwischen Stützstrebe und Hinterbaustrebe vorgesehen ist und nach Lösen dieses Schnellspannlöseelementes diese Stützstrebe an den Schwingenarm und der Schwingenarm mit Stützstrebe zusammen an das Zweirad faltbar sind.

Leicht zusammenfalten läßt sich aber auch eine Ausführungsform, bei der das Stützrad über ein zusätzliches Gelenk mit dem Schwingenarm verbunden und dadurch etwa parallel an das Zweirad faltbar ist. Bei einer solchen Ausführungsform bilden die über ein zusätzliches Gelenk miteinander verbundenen Schwingenarme und Stützstreben jeweils eine leicht ausziehbare und schnell zusammenfaltbare Gelenkschere.

Um das Zweirad an die Geländesituation beziehungsweise an das Können des Fahrers anpassen zu können, ist es vorteilhaft, wenn das oder die Stützräder beziehungsweise die Stützradkonstruktion in eine Stellung bringbar, insbesondere faltbar sind, in der ein stützradfreier Betrieb des Zweirades möglich ist.

Zweiräder mit Stützradkonstruktionen weisen häufig ein problematisches Fahrverhalten auf, das insbesondere alten oder behinderten Personen das Kurvenfahren wesentlich erschweren kann. Um das Fahrverhalten des erfindungsgemäßen Zweirades beim Kurvenfahren wesentlich zu verbessern und um das Zweirad praktisch mit einem aktiven Fahrwerk ausstatten zu können, ist nach einemweiterbildenden Vorschlag gemäß der Erfindung von eigener schutzwürdiger Bedeutung vorgesehen, daß das Stützrad oder die Stützräder entsprechend der Schrägstellung des Rahmens verschwenkbar sind.

Dabei sieht eine Ausführungsform gemäß der Erfindung vor, daß die Stützstreben der Stützradkonstruktionen mit ihren den Schwingenarmen abgewandten Endbereichen an einem doppelarmigen Schwenkhebel gehalten sind, welcher Schwenkhebel verschwenkbar am Rahmen gelagert ist. Da bei dieser Ausführungsform die Stützstreben an einem doppelarmigen Schwenkhebel gehalten sind, können auch die Stützräder bei kurvenbedingter Schrägstellung des Rahmens soweit einfedern, ohne daß die Stützräder beidseits den Bodenkontakt verlieren.

Nach einem weiteren Vorschlag gemäß der Erfindung ist vorgesehen, daß in die Stützstreben jeweils ein Druckzylinder integriert ist und daß jedem Druckzylinder ein beim Einschwenken des Lenkers betätigbarer Druckgeber zugeordnet ist. Bei dieser Ausführungsform können die Stützstreben mit dem darin integrierten Druckzylinder je nach dem Lenkeinschlag des Lenkers verkürzt oder verlängert werden. Um dabei auch eine kurvenbedingte Schrägstellung des Rahmens zumindest teilweise ausgleichen zu können, ist es vorteilhaft, wenn die einander zugeordneten Druckzylinder und Druckgeber über Kreuz angeordnet sind und jedem Druckzylinder jeweils ein auf der gegenüberliegenden Seite des Rahmens angeordneter Druckgeber zugeordnet ist.

Um auch handelsübliche Zweiräder im Bedarfsfall nachträglich mit zumindest einem Stützrad ausstatten zu können, ist es zweckmäßig, wenn die Stützradkonstruktion(en) am Rahmen lösbar befestigbar ist (sind).

Dabei kann es vorteilhaft sein, wenn der Schwingenarm der Stützradkonstruktion(en) an der unteren Strebe des Rahmen-Hinterbaus lösbar befestigbar und die Stützstrebe der Stützradkonstruktion(en) mit der oberen Strebe des Rahmen-Hinterbaus und/oder mit dem Sattelrohr lösbar verbindbar ist.

Um die Rahmengeometrie im Bereich der Stützradkonstruktion variieren und um die Fahreigenschaften individuell verändern zu können, sieht eine Ausführungsform gemäß der Erfindung vor, daß der Schwingenarm der Stützradkonstruktion(en) mittels einer Halterung relativ zum Rahmen in Fahrtrichtung verstellbar und festlegbar ist.

Aus Stabilitätsgründen kann es zweckmäßig sein, wenn die Stützstreben unmittelbar oberhalb der Drehachse der Stützräder abgestützt sind. Hierzu sieht eine bevorzugte Ausführungsform gemäß der Erfindung vor, daß die Stützstrebe der Stützradkonstruktion(en) mit ihrem dem Schwingenarm abgewandten Streben-Endbereich an einem Befestigungsarm angreift, der an der oberen Strebe des Rahmen-Hinterbaus und/oder am Sattelrohr lösbar befestigbar ist. Um dabei den Konstruktions- und Herstellungsaufwand noch zusätzlich zu reduzieren, kann es vorteilhaft sein, wenn den auf beiden Seiten des Zweirades vorgesehenen Stützradkonstruktionen ein gemeinsamer Befestigungsarm zugeordnet ist.

Weitere Merkmale der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: ein Fahrrad mit beidseits seitlich vorstehenden Stützradkonstruktionen in fahrbereitem Zustand,
- Fig. 2: ein mit Figur 1 vergleichbares Fahrrad in einer voll gefederten Ausführung,
- Fig. 3: ein Fahrrad mit einer seitlichen Stützradkonstruktion, bei der das Stützrad an einem Schwingenarm gehalten ist, der über eine Stützstrebe abgestützt wird, wobei die Stützstrebe als Stoßdämpfer ausgebildet ist,
- Fig. 4: das nochmals in einer Rückansicht dargestellte Fahrrad aus Figur 3 in zusammengefaltetem Zustand seiner Stützradkonstruktion,
- Fig. 5: ein in einer Rückansicht dargestelltes Fahrrad, dessen Stützradkonstruktion eine teleskopartig längenveränderbare Stützstrebe hat,
- Fig. 6: das Zweirad aus Figur 5 in zusammengefaltetem Zustand seiner Stützradkonstruktion,
- Fig. 7: ein Fahrrad bei welchem die Stützstrebe der Stützradkonstruktion lösbar am Schwingenhebel gehalten ist,
- Fig. 8: ein mit Figur 7 vergleichbares Fahrrad, dessen Stützradkonstruktion hier zusammengefaltet und eingeklappt dargestellt ist,
- Fig. 9: eine an einer Fahrradgabel vorgesehene Stützradkonstruktion in einer Vorderansicht,
- Fig. 10: ein Fahrrad in einer Detaildarstellung im Bereich des Ausfallendes seines Fahrradrahmens, wobei am Ausfallende zwei in Fahrtrichtung voneinander beabstandete Halte- und Gelenkpunkte für den Schwingenarm einer nicht weiter dargestellten Stützradkonstruktion vorgesehen sind,
- Fig. 11: den Verbindungsbereich zwischen dem Schwingenarm einer Stützradkonstruktion einerseits und dem nicht weiter dargestellten Ausfallende am Fahrradrahmen andererseits,
- Fig. 12: ein Fahrrad mit einer Stützradkonstruktion, bei welcher das Stützrad gegen eine Rückstellkraft verschwenkbar am Schwingenarm gehalten ist,
- Fig. 13: ein Fahrrad bei welchem der Schwingenarm der Stützradkonstruktion zumindest um 90° gedreht und platzsparend in Richtung zum Fahrradrahmen eingeschwenkt werden kann,
- Fig. 14: ein Fahrrad, bei welchem das Stützrad über eine Schnellkupplung leicht lösbar am Schwingenarm der Stützradkonstruktion gehalten ist,
- Fig. 15: ein mit Figur 3 vergleichbares Fahrrad, das an dem äußeren Endbereich des Schwingenarms seiner Stützradkonstruktion eine Trittstufe als Aufstiegshilfe aufweist,
- Fig. 16: ein Fahrrad, bei welchem die Stützstreben der beidseits vorgesehenen Stützradkonstruktionen mit ihren, den Schwingenarmen abgewandten Enden an einem doppelarmigen Schwenkhebel angreifen,
- Fig. 17: ein mit Figur 16 vergleichbares Fahrrad beim Kurvenfahren in seitlicher Schrägstellung des Fahrradrahmens,
- Fig. 18: ein Fahrrad mit einem aktiven Fahrwerk, bei welchem eine kurvenbedingte Schräglage des Fahrradrahmens über Druckgeber sowie Druckzylinder ausgeglichen wird,
- Fig. 19: eine am Fahrrad-Rahmen auch nachträglich noch lösbar befestigbare Stützradkonstruktion, bei welcher die Stützstrebe über einen Befestigungsarm mit einer oberen Strebe des Rahmen-Hinterbaus lösbar verbunden ist,
- Fig. 20: eine lösbar befestigbare Stützradkonstruktion, bei welcher die Stützstrebe über den Befestigungsarm mit dem Sattelrohr des Fahrrad-Rahmens verbunden ist, und
- Fig. 21: eine lösbar befestigbare Stützradkonstruktion, ähnlich der aus Fig. 19.

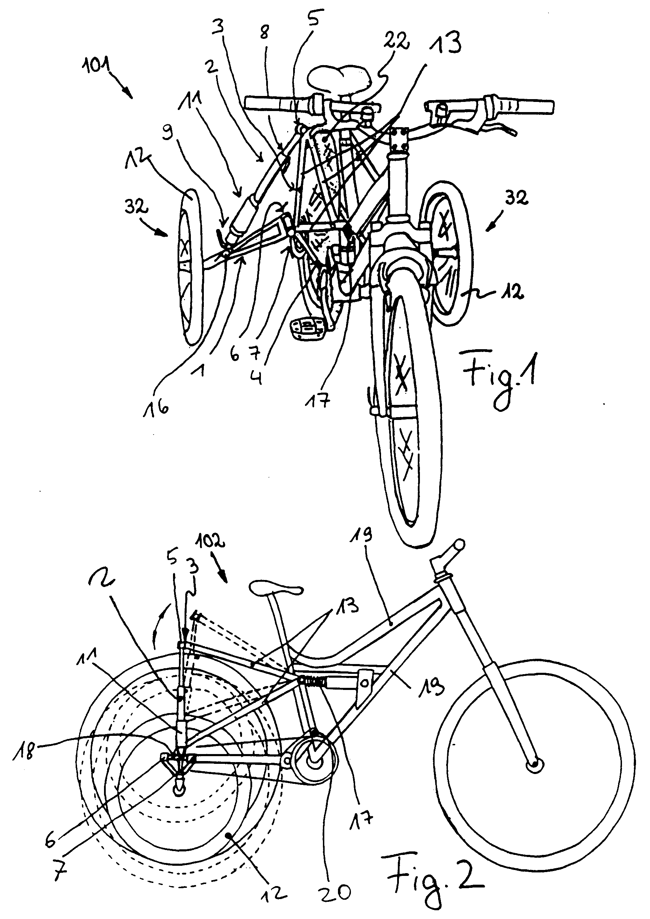

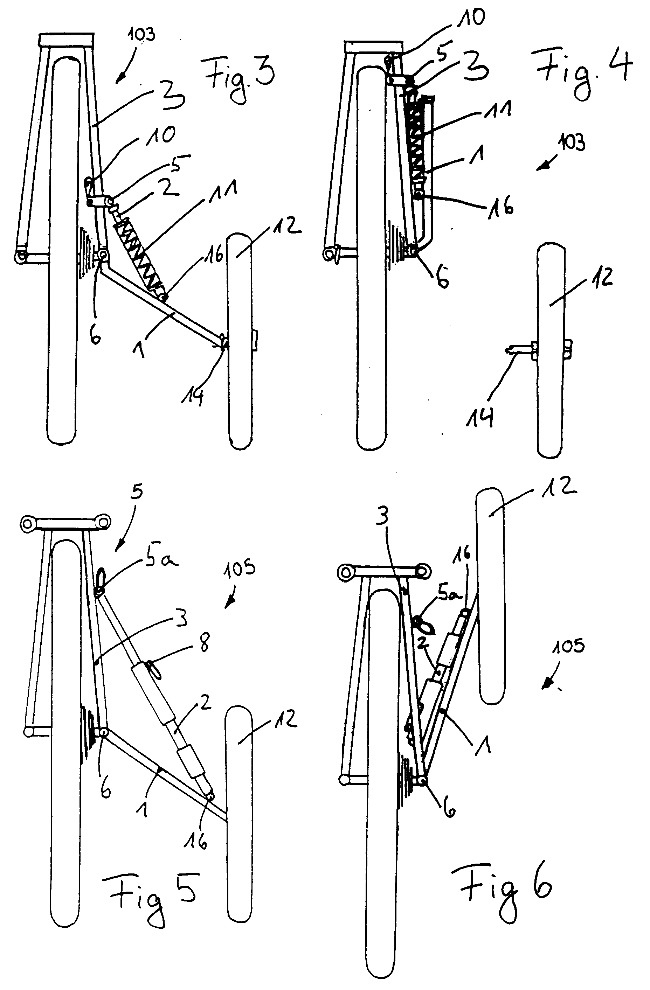

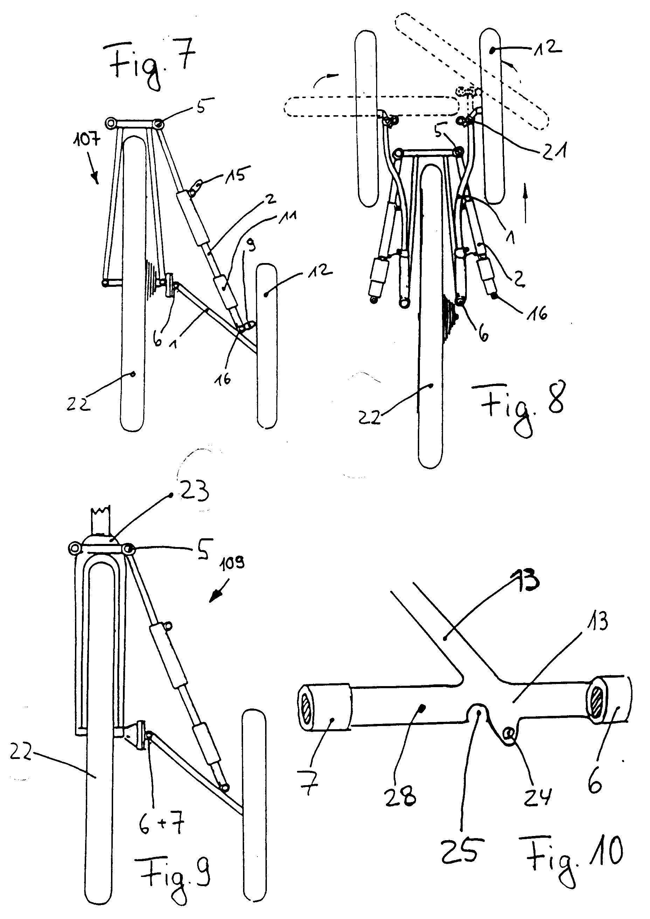

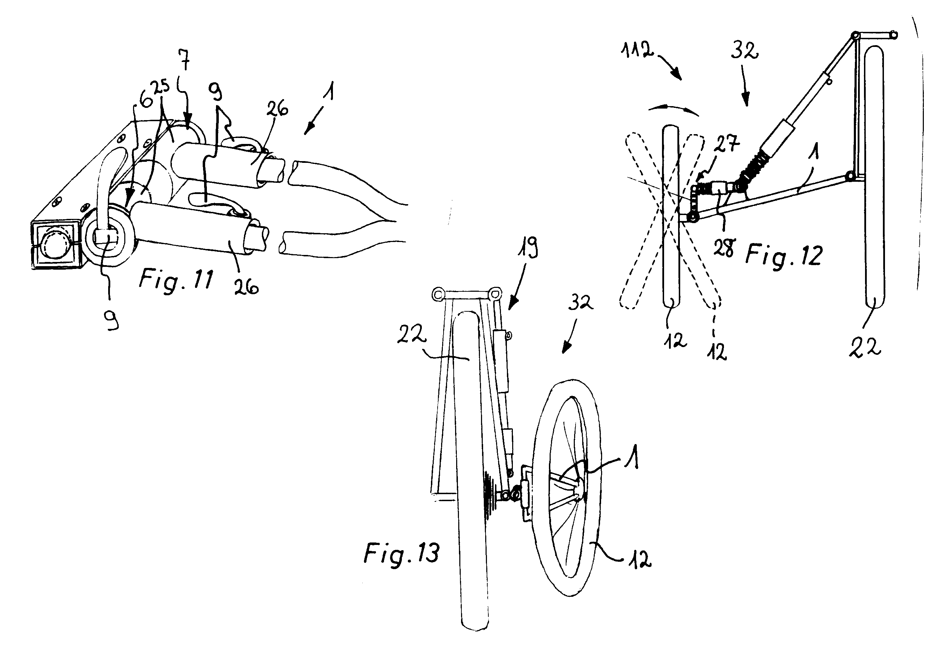

In Figur 1 ist ein Fahrrad 101 dargestellt, das an seinen beiden Längsseiten jeweils eine Stützradkonstruktion 32 aufweist. Die Stützradkonstruktionen 32 haben jeweils einen Schwingenarm 1, der am Fahrradrahmen in einer Vertikalebene schwenkbar gelagert ist. Jeder der Schwingenarme 1 weist an seinem freien äußeren Ende ein Stützrad 12 auf und ist über eine gefederte Stützstrebe 2 abgestützt. Die Stützstrebe 2 jeder Stützradkonstruktion 32 greift mit ihrem einen Ende an dem äußeren freien Endbereich des Schwingenarmes 1 an und ist mit ihrem gegenüberliegenden Ende oberhalb des Hinterrades 22 an einer etwa vertikal orientierten Hinterbaustrebe 3 gehalten.

Jede Stützradkonstruktion 32 bildet ein Dreieck, welches durch den Schwingenarm 1, die Stützstrebe 2 und die Hinterbaustrebe 3 sowie die dazugehörigen Gelenkstellen 5, 6, 7, 16 begrenzt wird. Darüber hinaus sind auch die Schwingenarme 1 dreieckförmig ausgebildet, wobei die Grundseite dieser Dreiecksform durch das Schwenkgelenk mit den Gelenkstellen 6, 7 gebildet wird. Durch die dreiecksförmige Ausgestaltung der Stützradkonstruktion 32 und ihrer Schwingenarme 1 wird eine größtmögliche Stabilität gewährleistet und insbesondere ein Verbiegen und Brechen des Schwingenarmes 1 beim Überfahren von Hindernissen mit Sicherheit vermieden.

In den Stützstreben 2 ist jeweils ein Federelement 11 oder dergleichen Stoßdämpfer integriert, um die auf die Stützräder 12 einwirkenden Bodenunebenheiten abzudämpfen. Dabei sind die Gelenk- und Verbindungsstellen 5, 16 der Stützstreben 2 am Schwingenarm 1 sowie an der Hinterbaustrebe 3 vorzugsweise drehbar gelagert.

Wie in Figur 1 angedeutet ist, sind zumindest an den zwischen den Schwingenarmen 1 und den Stützstreben 2 befindlichen Gelenkstellen 16 werkzeuglos lösbare und festlegbare Kupplungen vorgesehen, die hier durch Schnellspanner 9 gebildet sind. Um das Fahrrad 101 platzsparend verstauen und die an sich sperrigen Stützradkonstruktionen 32 bei Bedarf zusammenfalten zu können, muß lediglich der Schnellspanner 9 gelöst und die entsprechende Gelenkstelle 16 geöffnet werden. Anschließend läßt sich der Schwingenarm 1 nach oben und die Stützstrebe 2 nach unten verschwenken. Dabei ist die Stützstrebe 2 teleskopartig längenveränderbar und mittels eines weiteren Schnellspanners 8 in der jeweiligen Länge festlegbar und kann somit noch zusätzlich platzsparend zusammengeschoben werden.

In Figur 2 ist ein Fahrrad 102 mit seinen zusammenlegbaren Stützradkonstruktionen 32 in einer vollgefederten Ausführung dargestellt. Dabei ist der Hinterbau 13 um ein Drehgelenk 20 schwenkbar gelagert und mit Hilfe des Stoßdämpfers 17 am Hauptrahmen 19 abgestützt. Da bei dieser Ausführung nicht nur die Stützstreben 2, sondern der gesamte Hinterbau 13 über ein integriertes Federelement verfügt, kann sich der Fahrer mit dem Fahrrad 102 auch auf unbefestigten Wegen sicher fortbewegen.

Aus einem Vergleich der Figuren 2 und 10 wird deutlich, daß am Ausfallende des Hinterbaus 13 zwei in Fahrtrichtung voneinander beabstandete Verbindungspunkte 6, 7 vorgesehen sind, welche die mit dem Schwingenarm 1 verbundene Schwenkachse drehbar aufnehmen. Um für den Fahrer eine größtmögliche Fußfreiheit zu erreichen, ist der Schwingenarm möglichst weit hinten am Hinterbau 13 befestigt.

Während eine Verbindungsstelle 7 in Fahrtrichtung noch vor der für das Hinterrad 23 vorgesehenen Achsaufnahme 25 angeordnet ist, ist der weitere Verbindungspunkt 6 an einer entgegen der Fahrtrichtung orientierten Verlängerung des Ausfallendes 28 vorgesehen. Zwar ist die Stützstrebe 2 auch in Figur 2 an einer Hinterbaustrebe 3 angebracht, jedoch kann die Stützstrebe 2 auch an einem Gepäckträger oder dergleichen befestigt sein.

In Figur 3 ist ein Fahrrad 103 dargestellt, das nur an einer seiner beiden Längsseiten eine Stützradkonstruktion 32 trägt. Bei der auch hier aus der Stützstrebe 2, dem Schwingenarm 1 und der Hinterbaustrebe 3 bestehenden Stützradkonstruktion 32 ist die Stützstrebe 2 vollständig als Stoßdämpfer 11 ausgebildet. Dabei ist ein mit der Stützstrebe 2 verbundenes Schnellspannlöseelement 10 etwa vertikal verschiebbar an der Hinterbaustrebe 3 angebracht. Durch Lösen des Schnellspannlöseelementes 10 können die Stützstrebe 2 sowie der mit ihr gelenkig verbundene Schwingenarm 1 nach oben verschoben und das Stützrad 12 platzsparend an das Fahrrad gefaltet werden.

In Figur 4 ist dargestellt, daß das Stützradmittels einer Steckachse leicht lösbar am Schwingenarm 1 gehalten ist. Wie aus einem Vergleich der Figuren 3 und 4 deutlich wird, wird das Stützrad 12 mit samt seiner Steckachse 14 durch Betätigen eines Druckknopfes vom Schwingenarm 1 gelöst, um die Stützstrebe 2 durch Lockern des Schnellspannlöseelementes 10 an der Hinterbaustrebe 3 vertikal nach oben schieben zu können. Dabei faltet sich der Schwingenarm 1 an der durch die Verbindungsstellen 6, 7 gebildeten Schwenkachse praktisch automatisch zusammen und läßt sich bequem an das Fahrrad 103 parallel anlegen. In den Figuren 3 und 4 ist das Stützrad 12 mit samt seiner Steckachse 14 leicht lösbar am Schwingenarm 1 gehalten und kann beim Zusammenlegen der Stützradkonstruktion 32 vom Schwingenarm 1 abgenommen und separat verstaut werden. Wie in den Figuren 6 und 8 angedeutet ist, ist es aber auch möglich, daß das Stützrad 12 am Schwingenarm 1 verschwenkbar und in Fahrtstellung festlegbar gehalten sein kann.

In den Figuren 5 und 6 ist ein Fahrrad 105 gezeigt, bei dem an einem Anbringungspunkt 5 zwischen Stützstrebe 2 und Hinterbaustrebe 3 ein Schnellspannlöseelement 5a vorgesehen ist. Durch Lösen des Schnellspannlöseelementes 5a läßt sich die Stützstrebe 2 an den Schwingenarm 1 und der Schwingenarm 1 zusammen mit der Stützstrebe 2 an das Fahrrad 105 falten.

In Figur 7 ist ein Fahrrad 107 mit einer Stützradkonstruktion 32 dargestellt, bei welcher der Schwingenarm 1 und die Stützstrebe 2 über ein Schnellspanner 9 miteinander verbunden sind. Durch Lockern des Schnellspanners 9 können auch der Schwingenarm 1 und die Stützstrebe 2 voneinander getrennt werden. Dabei ist in Figur 8 dargestellt, daß vor einem Zusammenfalten der Stützradkonstruktion 32 das Stützrad 12 zuvor nicht gelöst werden muß, sondern mittels eines Gelenkes 21, wie die Stützradkonstruktion 32 selbst, parallel zum Fahrrad gefaltet werden kann.

Wie die hier dargestellten Beispiele zeigen, kann das Zweirad die Stützradkonstruktion 32 an einer Längsseite oder beidseits an der Vorderradgabel und/oder am Hinterbau aufweisen. So ist in Figur 9 ein Fahrrad 109 dargestellt, bei welcher die Stützradkonstruktion 32 einseitig an der Vorderradgabel 24 befestigt ist. Auch die Stützradkonstruktion 32 des Fahrrades 109 läßt sich bequem und platzsparend zusammenfalten. Dazu ist die Stützstrebe 2 teleskopartig längenveränderbar und zusätzlich sind an den Gelenkstellen 5, 6, 7 sowie an der zwischen Schwingenarm 1 und Stützstrebe 2 vorgesehenen Gelenkstelle werkzeuglos lösbare und festlegbare Kupplungen angebracht.

In Figur 11 ist dargestellt, wie der Schwingenarm 1 über mehrere Schnellspanner 9 am Hauptrahmen befestigt ist. Dabei sind die am Hauptrahmen angreifenden Gelenkstellen 6, 7 über einen Schnellspanner 9 miteinander verbunden, welcher eine am Schwingenarm 1 angreifende Gelenkhülse 25 durchsetzt. An dieser Gelenkhülse 25 stehen Aufnahmehülsen 26 vor, in welchen die freien Enden des Schwingenarms 1 eingeführt und ebenfalls mittels Schnellspanner 9 festgelegt sind.

Damit das im Vergleich zum Hinterrad 22 kleinere Stützrad Unebenheiten ausweichen und sich an die Schräglage des Fahrradrahmens 19 anpassen kann, ist das Stützrad 12 bei dem in Figur 12 dargestellten Fahrrad 112 über einen Kniehebel 27 am Schwingenarm 1 gehalten. Dieser doppelarmige Kniehebel 27 ist über ein Federelement 28 in der vertikalen Ausgangslage des Stützrades 12 gehalten.

Wie aus Figur 13 deutlich wird, kann es vorteilhaft sein, wenn der Schwingenarm 1 zumindest um 90° drehbar am Hauptrahmen 19 gelagert ist und beim Zusammenfalten der Stützradkonstruktionen 32 bequem an den Hauptrahmen 19 angelegt werden kann. Dabei ist es zweckmäßig, wenn auch das Stützrad 12 über ein Gelenk mit dem Schwingenarm 1 verbunden und etwa parallel zum Schwingenarm 1 gefaltet werden kann.

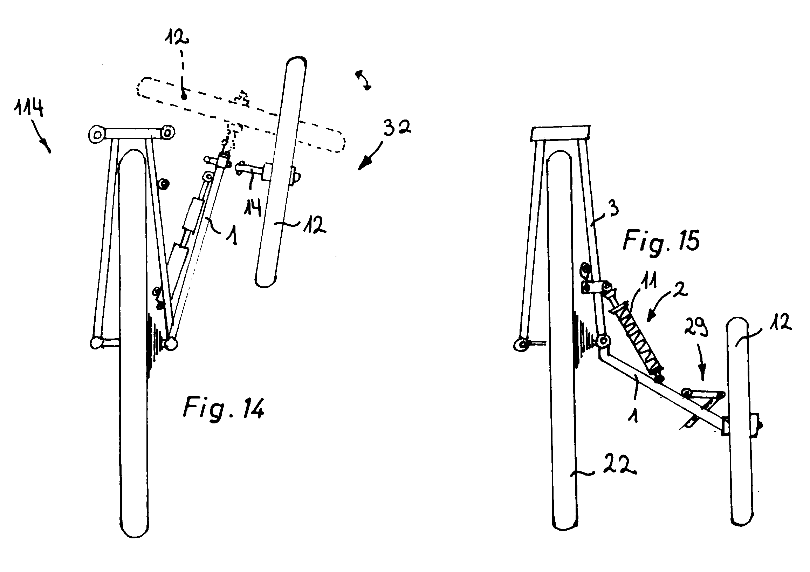

Bei dem in Figur 14 dargestellten Fahrrad 114 läßt sich das Stützrad 12 über eine vorzugsweise druckknopf-betätigbare Schnellkupplung vom Schwingenarm 1 lösen und anschließend in einer zum Schwingenarm 1 etwa parallel orientierten Mitnahmestellung vorübergehend am Schwingenarm 1 befestigen, bis die Stützradkonstruktion 32 bei Bedarf wieder in seine fahrbereite Konstruktion gefaltet und das Stützrad 12 mit seiner Steckachse 14 am Schwingenarm 1 befestigt wird.

In Figur 15 ist angedeutet, daß an dem freien Endbereich des Schwingenarmes 1 auch eine Trittstufe 29 als Aufstiegshilfe vorgesehen sein kann.

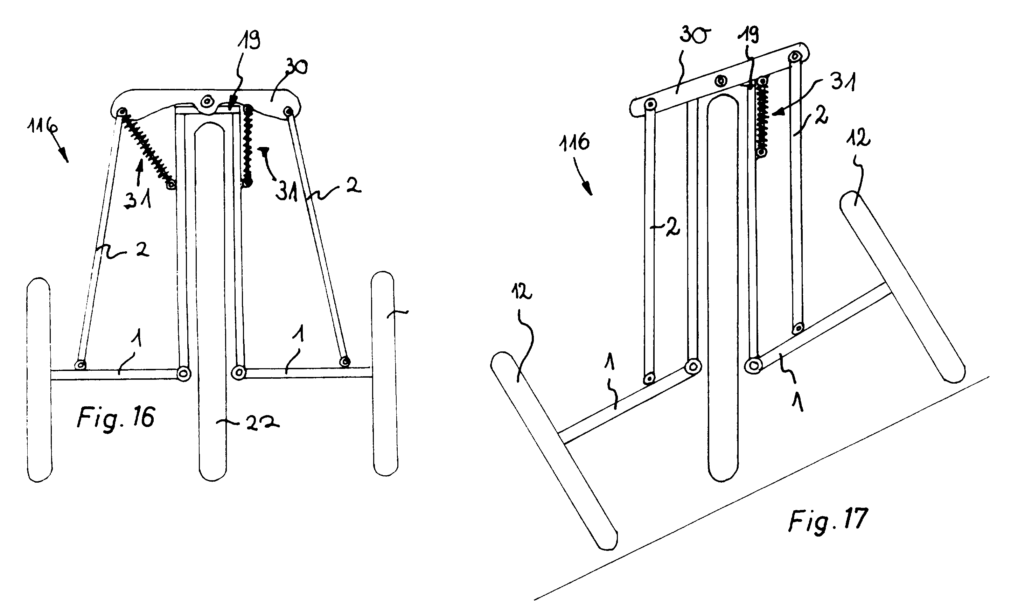

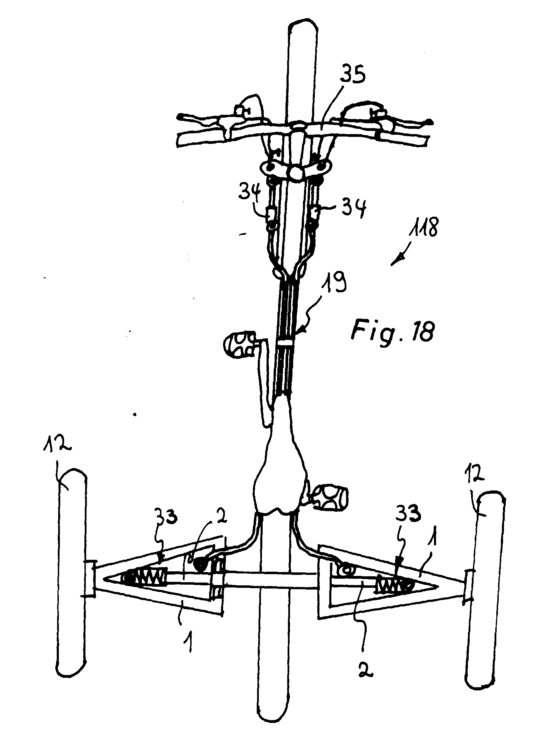

Die in den Figuren 16 und 17 dargestellten Fahrräder 116 weisen jeweils einen doppelarmigen Schwenkhebel 30 auf, der in einer Vertikalebene verschwenkbar am Hauptrahmen 19 gelagert ist. Die Stützstreben 2 greifen mit ihren dem Schwingenarm 1 abgewandten Enden an dem Schwenkhebel 30 an. Dabei wird der Schwenkhebel 30 mit zumindest einer Rückstellfeder 31 in einer etwa vertikalen Ausgangsstellung des Fahrradrahmens 19 gehalten. Wird nun der Fahrradrahmen beim Kurvenfahren in eine schräge Fahrposition gebracht, verschwenkt der Schwenkhebel 30 relativ zum Hauptrahmen 19 derart, daß er weiterhin etwa in einer Horizontallage angeordnet ist. Durch die Schwenkbewegung des Schwenkhebels 30 werden auch die Stützradkonstruktionen 32 derart in sich gekippt, daß die Schwingenarme 1 in einer etwa parallel zur Fahrebene angeordneten Lage verbleiben. Somit haben trotz der Schräglage des Fahrradrahmens 19 nicht nur das Hinterrad 22, sondern auch die Stützräder 12 weiterhin Bodenkontakt.

Auch bei dem in Figur 18 dargestellten Fahrrad 118 sind die Stützräder 12 entsprechend der Schrägstellung des Rahmens 19 verstellbar. Dabei ist in jede Stützstrebe 2 jeweils ein Druckzylinder 33 integriert, der eine vorgebbare Längenveränderung der Stützstreben 2 erlaubt. Die Druckzylinder 33 sind dazu mit Druckgebern 34 verbunden, die beim Einschwenken des Lenkers 35 betätigt werden. Um einer kurvenbedingten Schrägstellung des Fahrradrahmens 19 entgegenzuwirken, sind die einander zugeordneten Druckzylinder 33 und Druckgeber 34 über Kreuz angeordnet, so daß jeder Druckzylinder 33 mit einem Druckgeber 34 auf der gegenüberliegenden Seite des Fahrradrahmens 19 zusammenwirkt. Beim Einschwenken des Fahrrades 118 in eine Rechtskurve wird somit beispielsweise der auf der linken Seite angeordnete Druckgeber 34 betätigt, der den ihm zugeordneten Druckzylinder 33 an der rechten Stützradkonstruktion druckbeaufschlagt und zur Längenausdehnung veranlaßt. Somit läßt sich das Fahrwerk des Fahrrades 118 beim Kurvenfahren aufrichten und stabilisieren. Ein einfaches Fahrverhalten des Fahrrades 118 wird zusätzlich noch dadurch begünstigt, daß die Druckgeber 34 gleichzeitig auch als Lenkungsdämpfer ausgebildet sind.

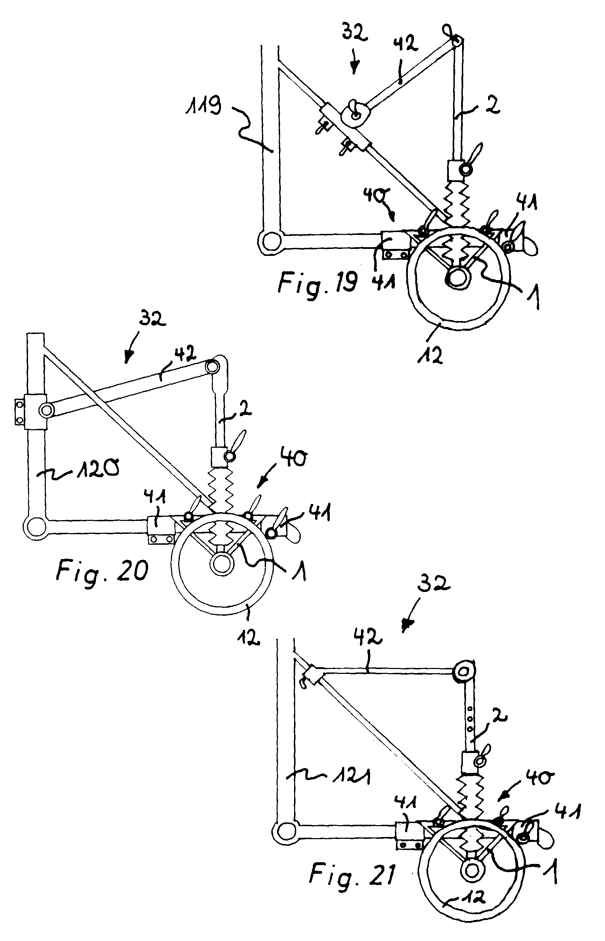

In den Fig. 19 bis 21 sind verschiedene Stützradkonstruktionen 32 dargestellt, die an den Fahrrädern 119, 120 bzw. 121 auch nachträglich noch lösbar befestigbar sind. Die in den Fig. 19 bis 21 dargestellten Stützradkonstruktionen 32 weisen jeweils einen Schwingenarm 1 auf, der an einer Halterung oder mittels dieser Halterung 40 in einer Vertikalebene verschwenkbar ist. Diese Halterung 40 weist zwei in Fahrtrichtung voneinander beabstandete Haltemanschetten 41 auf, die an der unteren Strebe des Rahmen-Hinterbaus befestigt sind.

Um die Rahmengeometrie bei Bedarf verändern und das Fahrverhalten der Fahrräder 119, 120 und 121 individuell anpassen zu können, ist der Schwingenarm 1 an der ihm zugeordneten Halterung 40 in Fahrtrichtung verschiebbar und vorzugsweise mittels Schnellspannern festlegbar gehalten. Um den Schwingenarm 1 relativ zum Fahrrad 119, 120 beziehungsweise 121 in Fahrtrichtung verstellen zu können, ist es aber auch möglich, die Halterung 40 an der unteren Strebe des Fahrrad-Hinterbaus verschiebbar und festlegbar auszugestalten.

Wie die Fig. 19 bis 21 zeigen, weist jeder der Schwingenarme 1 an seinem freien äußeren Ende ein Stützrad 12 auf und ist über eine gefederte Stützstrebe 2 abgestützt. Die Stützstreben 2 der in den Fig. 19 bis 21 dargestellten Stützradkonstruktionen 32 sind jeweils über einen Befestigungsarm 42 mit dem Rahmen des Fahrrades 119, 120, 121 lösbar verbunden. Dabei greift der Befestigungsarm 42 in den Fig. 19 und 21 an der oberen Strebe des Fahrrad-Hinterbaus an, während der Befestigungsarm 42 in Fig. 20 am Sattelrohr lösbar gehalten ist.

Die in den Fig. 19 bis 21 dargestellten Stützradkonstruktionen 32 können entweder nur auf einer Seite oder vorzugsweise auf beiden Seiten der Fahrräder 119, 120, 121 vorgesehen sein. Insbesondere bei der in Fig. 20 dargestellten Ausführungsform kann es zweckmäßig sein, wenn die auf beiden Seiten des Fahrrades 121 vorgesehenen Stützradkonstruktionen 32 einen gemeinsamen Befestigungsarm 42 haben.

Die hier dargestellten Systemaufbauten sind beispielsweise bei Transporträdern oder bei Therapierädern vorteilhaft einsetzbar.

Dabei ist auch eine leichte Anpassung des Zweirades an unterschiedlichen Körpergrößen und Gewichte möglich. Dabei können die Stützradkonstruktionen auf der linken und/oder rechten Längsseite des Zweirades angeordnet und gefedert oder ungefedert ausgestaltet sein.

## Patentansprüche

1. Zweirad mit einem auf zumindest einer Seite angebrachten, durch eine Stützradkonstruktion gehaltenen Stützrad, welche Stützradkonstruktion einen am Rahmen schwenkbar gelagerten Schwingenarm aufweist, an dessen freiem, äußeren Ende das Stützrad angebracht ist, wobei der Schwingenarm durch eine insbesondere gefederte Stützstrebe abgestützt ist, **dadurch gekennzeichnet**, daß ein oder mehrere Gelenkstellen der Stützradkonstruktion (32) werkzeuglos lösbare und festlegbare Kupplungen aufweisen.

2. Zweirad nach Anspruch 1, dadurch gekennzeichnet, daß die Gelenkstelle(n) zwischen der Stützstrebe (2) und dem Schwingenarm (1) und/oder zwischen dem Rahmen (19) und der Stützstrebe (2) und/oder zwischen dem Schwingenarm (1) und dem Rahmen (19) werkzeuglos lösbar und festlegbar ist (sind).

3. Zweirad nach Anspruch 1 oder 2, dadurch gekennzeichnet, daß das oder die Stützräder (12) mittels Steckachsen (14) mit dem jeweiligen Schwingenarm (1) verbunden und werkzeuglos lösbar und festlegbar sind.

4. Zweirad nach einem der Ansprüche 1 bis 3, dadurch gekennzeichnet, daß die werkzeuglos lösbaren und festlegbaren Kupplungen durch Schnellspanner (9) oder verschließbare Schnelltrennkupplungen gebildet sind.

5. Zweirad nach einem der Ansprüche 1 bis 4, dadurch gekennzeichnet, daß die Stützstrebe (2) und/oder der Schwingenarm (1) teleskopartig längenveränderbar und in der jeweiligen Lange festlegbar sind.

6. Zweirad nach einem der Ansprüche 1 bis 5, dadurch gekennzeichnet, daß der Schwingenarm (1) und die Stützstrebe (2) nach dem Lösen der Schnellspannkupplungen zum Zweirad hin faltbar sind.

7. Zweirad nach einem der Ansprüche 1 bis 6, dadurch gekennzeichnet, daß ein Schnellspannlöseelement (19) zwischen Stützstrebe (2) und Schwingenarm (1) angebracht ist und durch Lösen dieses Schnellspannlöseelementes (9) zuerst die Stützstrebe (2) nach unten an das Zweirad und dann der Schwingenarm (1) nach oben an das Zweirad faltbar sind.

8. Zweirad nach einem der Ansprüche 1 bis 7, dadurch gekennzeichnet, daß ein mit der Stützstrebe (2) verbundenes Schnellspannlöseelement (10) etwa vertikal verschiebbar an der Hinterbaustrebe (3) angebracht ist und durch Verschieben der Stützstrebe (2) und des Schwingenarms (1) nach oben das Stützrad (12) an das Zweirad faltbar ist.

9. Zweirad nach einem der Ansprüche 1 bis 8, dadurch gekennzeichnet, daß ein Schnellspannlöseelement (5a) an einem Anbringungspunkt zwischen Stützstrebe (2) und Hinterbaustrebe (3) vorgesehen ist und nach Lösen dieses Schnellspannlöselementes (5a) die Stützstrebe (2) an den Schwingenarm (4) und der Schwingenarm (1) mit Stützstrebe (2) zusammen an das Zweirad faltbar sind.

10. Zweirad nach einem der Ansprüche 1 bis 9, dadurch gekennzeichnet, daß das Stützrad (12) über ein zusätzliches Gelenk (21) mit dem Schwingenarm verbunden ist und dadurch etwa parallel an das Zweirad faltbar ist.

11. Zweirad nach einem der Ansprüche 1 bis 10, dadurch gekennzeichnet, daß das oder die Stützräder (12) beziehungsweise die Stützradkonstruktion (32) in eine Stellung bringbar, insbesondere faltbar sind, in der ein stützradfreier Betrieb des Zweirads möglich ist.

12. Zweirad nach dem Oberbegriff von Anspruch 1, insbesondere nach einem der Ansprüche 1 bis 11, dadurch gekennzeichnet, daß das Stützrad oder die Stützräder (12) entsprechend der Schrägstellung des Rahmens (19) verschwenkbar sind.

13. Zweirad nach einem der Ansprüche 1 bis 12, dadurch gekennzeichnet, daß die Stützstreben (2) der Stützradkonstruktionen (32) mit ihren den Schwingenarmen (1) abgewandten Endbereichen an einem doppelarmigen Schwenkhebel (30) gehalten sind, welcher Schwenkhebel verschwenkbar am Rahmen gelagert ist.

14. Zweirad nach einem der Ansprüche 1 bis 13, dadurch gekennzeichnet, daß in die Stützstreben (2) jeweils ein Druckzylinder (33) integriert ist und daß jedem Druckzylinder (33) jeweils ein beim Einschwenken des Lenkers (35) betätigbarer Druckgeber (34) zugeordnet ist.

15. Zweirad nach einem der Ansprüche 1 bis 14, dadurch gekennzeichnet, daß die einander zugeordneten Druckzylinder (33) und Druckgeber (34) über Kreuz angeordnet und jedem Druckzylinder (33) jeweils ein auf der gegenüberliegenden Seite des Rahmens (19) angeordneter Druckgeber (34) zugeordnet ist.

16. Zweirad nach einem der Ansprüche 1 bis 15, dadurch gekennzeichnet, daß die Stützradkonstruktion(en) (32) am Rahmen (19) lösbar befestigbar ist (sind).

17. Zweirad nach Anspruch 16, dadurch gekennzeichnet, daß der Schwingenarm (1) der Stützradkonstruktion(en) (32) an der unteren Strebe des Rahmen-Hinterbaus lösbar befestigbar und die Stützstrebe (2) der Stützradkonstruktion(en) (32) mit der oberen Strebe des Rahmen-Hinterbaus und/oder mit dem Sattelrohr lösbar verbindbar ist.

18. Zweirad nach Anspruch 16 oder 17, dadurch gekennzeichnet, daß der Schwingenarm (1) der Stützradkonstruktion(en) (32) mittels einer Halterung (40) relativ zum Rahmen (19) in Fahrtrichtung verstellbar und festlegbar ist.

19. Zweirad nach einem der Ansprüche 16 bis 18, dadurch gekennzeichnet, daß die Stützstrebe (2) der Stützradkonstruktion(en) (32) mit ihrem dem Schwingenarm (1) abgewandten Streben-Endbereich an einem Befestigungsarm (42) angreift, der an der oberen Strebe des Rahmen-Hinterbaus und/oder am Sattelrohr lösbar befestigbar ist.

20. Zweirad nach einem der Ansprüche 16 bis 19, dadurch gekennzeichnet, daß den auf beiden Seiten des Zweirades vorgesehenen Stützradkonstruktionen (32) ein gemeinsamer Befestigungsarm (42) zugeordnet ist.
